# EUROPÄISCHE PATENTSCHRIFT

(11) **EP 1 876 055 B1**
(45) Veröffentlichungstag und Bekanntmachung des Hinweises auf die Patenterteilung: **03.09.2008**
(21) Anmeldenummer: 06014090.2
(22) Anmeldetag: 07.07.2006
(51) Int. Cl.: B60Q 1/14

(54) **Lenkstockschalter**
Steering column stalk switch
Commutateur de colonne de direction

(43) Veröffentlichungstag der Anmeldung: 09.01.2008
(73) Patentinhaber: Delphi Technologies, Inc., Troy, Michigan 48007 (US)
(72) Erfinder: Reischl, Erik, 55765 Birkenfeld (DE); Leng, Peter, 55128 Mainz (DE); Schnell, Klaus, 55437 Appenheim (DE); Köhler, Joachim, 55546 Biebelsheim (DE)
(74) Vertreter: Becker, Bernd

(56) Entgegenhaltungen:
- EP-A- 1 207 076
- EP-A2- 0 939 008
- DE-A1- 4 328 427
- DE-C1- 19 808 665
- DE-U1- 29 812 227
- DE-U1- 29 901 614

## Beschreibung

Die Erfindung bezieht sich auf einen Lenkstockschalter nach dem Oberbegriff des Anspruchs 1.

Die DE 299 01 614 U1 offenbart einen elektrischen Schalter zum kontaktlosen Schalten mit einem beweglichen Schalthebel, dem ein zur Erzeugung einer die einzelnen Schalterstellungen durch ein spürbares Rasten kennzeichnenden Schalthaptik in einer Schaltkulisse geführter Schaltarm mit einer magnetosensitiven Schaltstellungserfassungseinrichtung zugeordnet ist. Die Schaltstellungserfassungseinrichtung umfasst einen an die Schaltbewegung des Schaltarms gekoppelten magnetischen Signalgeber und eine zur Bewegung des magnetischen Signalgebers ortsfest angeordnete, aus einzelnen magnetoelektrischen an eine Auswerteeinheit angeschlossenen Wandlern bestehende Wandleranordnung. Der Schaltarm steht mit zwei funktional und gegenständlich voneinander getrennten Modulen im Eingriff, wobei das eine Modul die Schaltkulisse ist, in die der Schaltarm eingreift und in der der Schaltarm geführt ist, und das andere Modul die Schalterfassungseinrichtung mit dem durch die Bewegung des Schaltarms mitbewegten Signalgeber ist. Der magnetische Signalgeber ist derart gelenkig an die Bewegung des Schaltarms gekoppelt, dass eine rotatorische Bewegung des Schaltarms in einer translatorischen Bewegung des Signalgebers resultiert. Hierbei ist der Signalgeber als eine codierte Magnetplatte ausgebildet, deren Codierung durch mehrere parallel zueinander in Bewegungsrichtung des Signalgebers verlaufende, unterschiedlich magnetisierte Spuren gebildet ist und die elektromagnetischen Wandler der Wandleranordnung sind zum Erfassen dieser Spuren ausgebildet. Dieser Schalter ist insofern nachteilig, als er einen relativ aufwändigen Aufbau aufweist.

Im Weiteren zeigt die DE 298 12 227 U1 eine Vorrichtung zum Erfassen von Schalterstellungen eines mechanisch betätigbaren Schalters mit einem zwangsgeführten Schaltorgan, das in den unterschiedlichen vorgegebenen Schaltstellungen fixiert gehalten ist. Die Vorrichtung umfasst einen dem Schaltorgan zugeordneten Signalgeber und eine der Anzahl der zu erfassenden Schalterstellungen entsprechende Anzahl an Aufnahmeeinheiten, wobei jeder zu erfassenden Schalterstellung eine Aufnahmeeinheit in einer Anordnung derart zugeordnet ist, dass in einer zu erfassenden Schalterstellung die von dem Signalgeber ausgehenden Signale von der dieser Schalterstellung zugeordneten Aufnahmeeinheit erfasst werden.

Die den nächstliegenden Stand der Technik bildende DE 198 08 665 C1 offenbart einen Lenkstockschalter mit einem kreuzweise zu beaufschlagenden Schalthebel, der einen magnetischen Signalgeber aufweist, dem mehrere mit einer Auswerteeinheit gekoppelte ortsfest angeordnete Magnetfeldsensoren zur Ermittlung der Schaltstellungen des Schalthebels zugeordnet sind, wobei der Schalthebel einen Druckschalter umfasst und der Signalgeber sowie die Magnetfeldsensoren zur Ermittlung der Schaltstellungen des Druckschalters dienen.

Es ist Aufgabe der Erfindung, einen Lenkstockschalter der eingangs genannten Art zu schaffen, der einen einfachen und kostengünstigen Aufbau aufweist.

Erfindungsgemäß wird die Aufgabe dadurch gelöst, dass der Schalthebel einen Drehschalter lagert und der Signalgeber sowie die Magnetfeldsensoren zur Ermittlung der Schaltstellungen des Drehschalters dienen, wobei der Schalthebel in seinem Inneren eine Schaltachse aufweist, deren den Magnetfeldsensoren zugewandtes Ende den Signalgeber trägt, wobei die Schaltachse mit einem in dem Schalthebel gelagerten Betätigungsring des Drehschalters drehfest verbunden ist und der Signalgeber als zylindrischer Dauermagnet ausgebildet ist, dessen Längsachse nicht parallel zur Schaltachse ausgerichtet ist.

Somit erfolgt sowohl bei einer kreuzweisen Beaufschlagung des Schalthebels als auch bei einer rotatorischen Betätigung des Drehschalters ein kontaktloses Schalten, wobei es nicht erforderlich ist, den Signalgeber gelenkig zu lagern, wie es im Stand der Technik beschrieben ist. Die Stellung des Signalgebers zu den Magnetfeldsensoren, von denen beispielsweise zwei vorhanden sind, wird demnach sowohl durch den Schalthebel als auch den darin gelagerten Drehschalter bestimmt und aus den unterschiedlichen möglichen Stellungen ermittelt die Auswerteeinheit die eingenommene Schaltstellung.

Aufgrund dieser Maßnahmen erfolgt sowohl bei einer kreuzweisen Beaufschlagung des Schalthebels als auch bei einer getasteten oder verrastbaren Druckbetätigung des Druckschalters ein kontaktloses Schalten. Die Stellung des Signalgebers zu den Magnetfeldsensoren ist zum einen durch die jeweilige Schaltstellung des Schalthebels und zum anderen durch die Schaltstellung des Druckschalters bestimmt. Aus den unterschiedlichen möglichen Stellungen des Signalgebers zu den Magnetfeldsensoren ermittelt die Auswerteeinheit die aktuelle Schaltstellung. Durch die Ausgestaltung des Signalgebers als zylindrischer Dauermagnet und die Anordnung des Dauermagneten, ist eine die unterschiedlichen Schaltstellungen repräsentierende Signalgebung zu bewerkstelligen.

Zweckmäßigerweise ist die Schaltachse an einem Betätigungselement des an der freien Stirnseite des Schalthebels angeordneten Druckschalters befestigt. Demnach ist es ohne weiteres möglich, die Schaltachse sowohl dem Drehschalter als auch dem Druckschalter zuzuordnen, was im Rahmen der Erfindung ausdrücklich umfasst ist. In einer solchen Ausgestaltung ist die Schaltachse drehfest aber verschiebbar dem Drehschalter und in axialer Richtung fest dem Druckschalter bzw. deren entsprechenden Betätigungselementen zugeordnet, wobei es selbstverständlich auch möglich ist, den gesamten Schalthebel oder das ringförmige Betätigungselement des Drehschalters in axialer Richtung verschiebbar zu lagern, um einen Druckschalter zu realisieren.

Vorzugsweise weist der dipolare Dauermagnet entlang seiner Längshälften die Pole unterschiedlicher Vorzeichen auf. Bevorzugt sind der Dauermagnet und ein die Magnetfeldsensoren umfassendes Sensorfeld derart zueinander ausgerichtet angeordnet, dass eine freie Stirnseite des Dauermagneten im Wesentlichen parallel zu dem Sensorfeld verläuft. Somit erfassen die Magnetfelssensoren eindeutig einer Schaltstellung zuzuordnende Signale des Dauermagneten. Selbstverständlich ist die freie Stirnseite des Dauermagneten nicht in sämtlichen Schaltstellungen exakt parallel zu dem Sensorfeld ausgerichtet, sondern beschreibt eine Kreisbahn, die von der parallelen Ausrichtung geringfügig abweichen kann.

Zur Realisierung einer kompakten Bauweise sind vorteilhafterweise der Dauermagnet und das Sensorfeld in einem gabelförmigen Freiraum des Schalthebels angeordnet, an den sich ein dem Schalthebel zugeordneter Fuß mit einer Rasthülse anschließt, die eine gehäuseseitige Rastkurve beaufschlagt. Zweckmäßigerweise sind die Magnetfeldsensoren zur Erfassung von Drehbewegungen des Dauermagneten und die Auswerteelektronik zum Erfassen der Schwenkbewegungen ausgelegt.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigt:

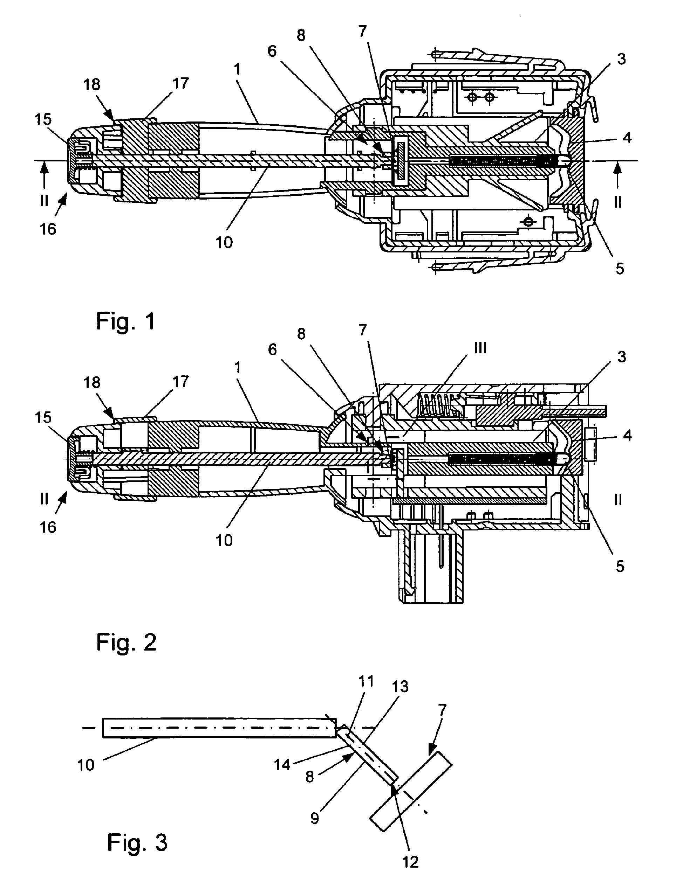

- Fig.1: eine Schnittdarstellung eines erfindungsgemäßen Lenkstockschalters,
- Fig.2: eine Schnittdarstellung des Lenkstockschalters gemäß Linie II-II nach Fig. 1 und
- Fig.3: eine vergrößerte schematische Darstellung der Einzelheit III nach Fig. 2.

Der Lenkstockschalter umfasst einen Schalthebel 1, der in einen in einem Gehäuse 2 gelagerten Fuß 3 eingesteckt ist. Der Fuß 3 des kreuzweise verschwenkbaren Schalthebels 1 weist an seinem freien Ende eine mit einer Rastkurve 4 zusammenwirkende Rasthülse 5 auf. Im Kopplungsbereich des Fußes 3 mit dem Schalthebel 1 ist ein Freiraum 6 vorgesehen, in dem sich ein mindestens zwei Magnetfeldsensoren umfassendes Sensorfeld 7 und ein damit zusammenwirkender magnetischer Signalgeber 8, der als Dauermagnet 9 ausgebildet ist, befinden. Der zylindrische Dauermagnet 9 ist an einem Ende einer in dem Schalthebel 1 gelagerten Schaltachse 10 derart befestigt, dass dessen Längsachse 11 nicht parallel zur Schaltachse 10 und seine freie Stirnfläche 12 zu dem Sensorfeld 7 ausgerichtet ist. Der dipolare Dauermagnet 9 weist entlang seiner Längshälften 13, 14 die Pole unterschiedlicher Vorzeichen auf. Die Schaltachse 10 ist mit ihrem dem Dauermagneten 9 gegenüberliegenden Ende mit einem Betätigungselement 15 eines Druckschalters 16 verbunden, das in der freien Stirnseite des Schalthebels 1 angeordnet ist. Im Weiteren steht die Schaltachse 10 mit einem in dem Schalthebel 1 drehbar gelagerten Betätigungsring 17 eines Drehschalters 18 in drehfester Verbindung.

Bei einer Schwenkbewegung des Schalthebels 1 in eine seiner kreuzweise zueinander angeordneten getasteten oder verrasteten Schaltpositionen und bei einer Druckbeaufschlagung des Betätigungselementes 15 des Druckschalters 16 sowie einer rotatorischen Beaufschlagung des Betätigungsringes 17 des Drehschalters 18 verändert sich die Lage des Dauermagneten 9 zu den Magnetfeldsensoren des Sensorfeldes 7. Die mit einer mit Anschlusskontakten 19 versehenen Leiterplatte 20 gekoppelten Magnetfeldsensoren übermitteln die jeweiligen Signale an eine Auswerteeinheit, die Bestandteil des Lenkstockschalters oder in eine Bordelektronik eines Kraftfahrzeuges integriert sein kann.

## Patentansprüche

1. Lenkstockschalter, insbesondere für ein Kraftfahrzeug, mit einem kreuzweise zu beaufschlagenden Schalthebel (1), der einen magnetischen Signalgeber (8) aufweist, dem mehrere mit einer Auswerteeinheit gekoppelte ortsfest angeordnete Magnetfeldsensoren zur Ermittlung der Schaltstellungen des Schalthebels (1) zugeordnet sind, **dadurch gekennzeichnet, dass** der Schalthebel (1) einen Drehschalter (18) lagert und der Signalgeber (8) sowie die Magnetfeldsensoren zur Ermittlung der Schaltstellungen des Drehschalters (18) dienen, wobei der Schalthebel (1) in seinem Inneren eine Schaltachse (10) aufweist, deren den Magnetfeldsensoren zugewandtes Ende den Signalgeber (8) trägt, wobei die Schaltachse (10) mit einem in dem Schalthebel (1) gelagerten Betätigungsring (17) des Drehschalters (18) drehfest verbunden ist und der Signalgeber (8) als zylindrischer Dauermagnet (9) ausgebildet ist, dessen Längsachse (11) nicht parallel zur Schaltachse (10) ausgerichtet ist.

2. Lenkstockschalter nach Anspruch 1, **dadurch gekennzeichnet, dass** der Schalthebel (1) einen Druckschalter (16) umfasst und der Signalgeber (8) sowie die Magnetfeldsensoren zur Ermittlung der Schaltstellungen des Druckschalters (16) dienen.

3. Lenkstockschalter nach den Ansprüchen 1 oder 2, **dadurch gekennzeichnet, dass** die Schaltachse (10) an einem Betätigungselement (15) des an der freien Stirnseite des Schalthebels (1) angeordneten Druckschalters (16) befestigt ist

4. Lenkstockschalter nach Anspruch 1, **dadurch gekennzeichnet, dass** der Dauermagnet (9) dipolar ist, und entlang seiner Längshälften (13, 14) die Pole unterschiedlicher Vorzeichen aufweist.

5. Lenkstockschalter nach Anspruch 1, 2 oder 4, **dadurch gekennzeichnet, dass** der Dauermagnet (9) und ein die Magnetfeldsensoren umfassendes Sensorfeld (7) derart zueinander ausgerichtet angeordnet sind, dass eine freie Stirnseite (12) des Dauermagneten (9) im Wesentlichen parallel zu dem Sensorfeld (7) verläuft.

6. Lenkstockschalter nach Anspruch 5, **dadurch gekennzeichnet, dass** der Dauermagnet (9) und das Sensorfeld (7) in einem gabelförmigen Freiraum (6) des Schalthebels (1) angeordnet sind, an den sich ein dem Schalthebel (1) zugeordneter Fuß (3) mit einer Rasthülse (4) anschließt, die eine gehäuseseitige Rastkurve (5) beaufschlagt.

## Claims

1. Steering column switch, in particular for a motor vehicle, having a switch lever (1) which is to be acted upon crosswise and has a magnetic signal transmitter (8) with which are associated several magnetic field sensors coupled to an evaluating unit and mounted stationarily for determining the switching positions of the switch lever (1), **characterised in that** the switch lever (1) mounts a rotary switch (18), and the signal transmitter (8) and magnetic field sensors serve to determine the switching positions of the rotary switch (18), the switch lever (1) having in its interior a switching shaft (10) of which the end facing towards the magnetic field sensors carries the signal transmitter (8), the switching shaft (10) being non-rotatably connected to an actuating ring (17) of the rotary switch (18) mounted in the switch lever (1), and the signal transmitter (8) being designed as a cylindrical permanent magnet (9) of which the longitudinal axis (11) is oriented non-parallel to the switching shaft (10).

2. Steering column switch according to claim 1, **characterised in that** the switch lever (1) includes a push switch (16), and the signal transmitter (8) and magnetic field sensors serve to determine the switching positions of the push switch (16).

3. Steering column switch according to claims 1 or 2, **characterised in that** the switching shaft (10) is attached to an actuating element (15) of the push switch (16) arranged at the free end face of the switch lever (1).

4. Steering column switch according to claim 1, **characterised in that** the permanent magnet (9) is dipolar and along its longitudinal halves (13, 14) has the poles with different polarity signs.

5. Steering column switch according to claim 1, 2 or 4, **characterised in that** the permanent magnet (9) and a sensor field (7) encompassing the magnetic field sensors are arranged with an orientation relative to each other such that a free end face (12) of the permanent magnet (9) runs substantially parallel to the sensor field (7).

6. Steering column switch according to claim 5, **characterised in that** the permanent magnet (9) and the sensor field (7) are arranged in a fork-shaped free space (6) of the switch lever (1), which is adjoined by a base (3) associated with the switch lever (1) and having a latch sleeve (4) which acts upon a latch curve (5) on the housing side.

## Revendications

1. Commutateur de colonne de direction, notamment pour un véhicule automobile, avec un levier de commutation (1) à solliciter en croix qui comprend un générateur de signal magnétique (8), auquel sont associés plusieurs capteurs de champ magnétique disposés de manière stationnaire et couplés à une unité d'exploitation pour la détermination des positions de commutation du levier de commutation (1), **caractérisé en ce que** un commutateur rotatif (18) est logé dans le levier de commutation (1), et **en ce que** le générateur de signal (8) ainsi que les capteurs de champ magnétique servent à la détermination des positions de commutation du commutateur rotatif (18), le levier de commutation (1) présentant à l'intérieur un axe de commutation (10), dont l'extrémité orientée vers les capteurs de champ magnétique porte le générateur de signal (8), l'axe de commutation (10) étant relié de manière fixe en rotation à un anneau d'actionnement (17) du commutateur rotatif (18) logé dans le levier de commutation (1), et le générateur de signal (8) étant réalisé comme un aimant permanent cylindrique (9) dont l'axe longitudinal (11) n'est pas orienté parallèlement à l'axe de commutation (10).

2. Commutateur de colonne de direction selon la revendication 1, **caractérisé en ce que** le levier de commutation (1) comporte un commutateur à pression (16), et **en ce que** le générateur de signal (8) ainsi que les capteurs de champ magnétique servent à la détermination des positions de commutation du commutateur à pression (16).

3. Commutateur de colonne de direction selon la revendication 1 ou 2, **caractérisé en ce que** l'axe de commutation (10) est fixé à un élément d'actionnement (15) du commutateur à pression (16) disposé au niveau du côté avant libre du levier de commutation (1).

4. Commutateur de colonne de direction selon la revendication 1, **caractérisé en ce que** l'aimant permanent (9) est dipolaire, et **en ce qu'**il présente le long de ses moitiés longitudinales (13, 14) des pôles de signes différents.

5. Commutateur de colonne de direction selon la revendication 1, 2 ou 4, **caractérisé en ce que** l'aimant permanent (9) et une colonne de capteurs (7) comportant les capteurs de champ magnétique sont disposés de manière orientée l'un par rapport à l'autre de manière à ce qu'un côté frontal libre (12) de l'aimant permanent (9) s'étende de manière essentiellement parallèle à la colonne de capteurs (7).

6. Commutateur de colonne de direction selon la revendication 5, **caractérisé en ce que** l'aimant permanent (9) et la colonne de capteurs (7) sont disposés dans un espace libre (6) du levier de commutation (1) en forme de fourche, au niveau duquel un pied (3) associé au levier de commutation (1) se raccorde à une douille d'arrêt (4) qui admet une courbe d'arrêt (5) côté boîtier.
